Europäisches Patentamt

European Patent Office

Office européen des brevets

(19)

(11) EP 0 808 863 A2

(12) **EUROPEAN PATENT APPLICATION**

(43) Date of publication:
26.11.1997 Bulletin 1997/48

(51) Int Cl.⁶: **C08G 77/58**, C04B 35/589

(21) Application number: 97303341.8

(22) Date of filing: 16.05.1997

(84) Designated Contracting States:
DE FR GB

(30) Priority: 20.05.1996 US 650752

(71) Applicant: DOW CORNING CORPORATION
Midland Michigan 48686-0994 (US)

(72) Inventors:
• Brewer, Christopher Michael
Farwell, Michigan 48622 (US)

• Bujalski, Duane Ray
Auburn, Michigan 48611 (US)
• Zank, Gregg Alan
Midland, Michigan 48640 (US)

(74) Representative: Kyle, Diana
Elkington and Fife
Prospect House
8 Pembroke Road
Sevenoaks, Kent TN13 1XR (GB)

(54) **Crosslinkers for silazane polymers**

(57) A method of crosslinking a silazane polymer having Si-H bonds is described in which the polymer is mixed with a crosslinker, comprising a silazane oligomer having an alkenyl group and a crosslinking promoter and is then heated to a temperature sufficient to crosslink said silazane polymer. The mixture of silazane polymer, crosslinker and promoter is useful in the formation of ceramic matrix composites.

EP 0 808 863 A2

**Description**

The present invention relates to materials which are useful for crosslinking silazane polymers. These crosslinkers improve the processability of the silazanes so they can be used as precursors to ceramic matrix composites (CMCs).

CMCs and methods for their manufacture are well known in the art. Generally, they comprise a matrix phase which is formed by chemical vapor deposition or polymer infiltration pyrolysis and a reinforcement phase such as fibers.

The polymer impregnation approach to making CMCs comprises infiltrating an assembly of fibers with a preceramic polymer and then heating the impregnated fibers to ceramify the polymer. Often, the body formed thereby needs repeated impregnation with the preceramic polymer and subsequent pyrolysis to increase the density of the resulting product.

The preparation of thermally and oxidatively stable CMCs by polymer impregnation is at least partially dependent on the preceramic polymer chosen for impregnation. Silazane polymers (or polysilazanes - characterized as having backbones with alternating silicon and nitrogen atoms) have been shown in the art to be useful for this purpose.

To be useful ceramic precursors, however, the polysilazanes must also be curable (infusible or crosslinkable) to prevent deformation of the ceramic upon heating. Various approaches to providing curability have been suggested. Thus, for instance, EP-A 0,549,224 teaches the use of silazanes in a polymer impregnation and pyrolysis process for manufacturing CMCs. That patent mentions the desirability of curable polymers but does not teach the curing materials set forth herein.

US-A 5,086,126 claims a method of producing silazane polymers having functional groups attached thereto. That method comprises treating a silazane polymer having N-H bonds with an alkyllithium and then reacting the resultant material with a chlorosilane having a desired functional group. The patent requires that the functional group be one which allows for curing the polymer, but it does not teach the curing materials of the present invention.

US-A 5,169,908 describes curable hydridopolysilazane polymers obtained by reacting these polymers with borane. The resultant polymers have B-H bonds which, upon heating, react with Si-H and N-H bonds in the polymers and, thus, cause them to crosslink. This reference, too, fails to teach the curing materials claimed herein.

US-A 5,262,553 discloses a method for crosslinking polysilazanes. Therein, a crosslinking material having 2 boron functional groups is reacted with a polysilazane having Si-H or N-H bonds. Pursuant to this reaction, B-N or B-Si bonds are formed and the polymer is thereby crosslinked. Again, this reference does not teach the materials claimed herein.

We have now found that functional silazane oligomers can be used to cure Si-H functional silazane polymers.

The present invention provides a method of crosslinking a silazane polymer. The method comprises first preparing a mixture comprising a silazane polymer having Si-H bonds, a crosslinker comprising a silazane oligomer having an alkenyl functional group and a crosslinking promoter. The mixture is then heated to a temperature sufficient to crosslink the silazane polymer.

The present invention is based on our discovery that functional silazane oligomers can be used to crosslink polysilazanes having Si-H bonds and, thus, to render them more useful as ceramic precursors. Our approach has many advantages. For instance, it allows for better control over the crosslinking reaction and it produces deep section curing of the polymers. Similarly, these mixtures can be engineered for ease in processing. For example, the crosslinker can be used to modify the viscosity of the material so it has the appropriate properties for a given application. Additionally, since a solvent is not necessary, solvent removal steps are not required and a higher char yield is achieved.

The method of curing the polysilazanes of the present invention involves mixing the polysilazane having Si-H bonds with the crosslinker and the crosslinking promoter followed by heating to facilitate the crosslinking reaction. Upon reaction, the functional groups on the crosslinker react with the Si-H bonds of the polysilazane to form Si-C bonds and, thereby, cause crosslinking.

The polysilazanes useful herein are any which have Si-H bonds for reaction. Generally, these polymers have backbones of repeating silicon and nitrogen atoms and also have units of the type [R'R"SiNH], [R'Si(NH)$_{3/2}$] and/or [R'R"R'''Si(NH)$_{1/2}$]r where each R', R" and R''' is independently selected from the group consisting of hydrogen atom, alkyl radicals containing 1 to 20 carbon atoms such as methyl, ethyl and propyl; aryl radicals such as phenyl; and unsaturated hydrocarbon radicals such as vinyl or hexenyl. Additionally, these hydrocarbon radicals can contain hetero atoms such as silicon or nitrogen to produce groups such as alkylaminos, aminoalkyls and silyls. Obviously, at least 1 R', R" or R''' in these polymeric units must be a hydrogen for the crosslinking reaction. Examples of specific polysilazane units include [Ph$_2$SiNH], [PhSi(NH)$_{3/2}$], [MeSi(NH)$_{3/2}$], [Me$_2$HSi(NH)$_{1/2}$] [MeHSiNH], [ViSi(NH)$_{3/2}$], [Vi$_2$SiNH], [PhViSiNH], [HSi(NH)$_{3/2}$], [PhHSiNH] and [MeViSiNH]. These polysilazanes may be homopolymers where each unit has an Si-H bond or they may be co-polymers where one or more units have Si-H bonds while other units do not include Si-H bonds.

Representative examples of such polymers include those of US-As 4,312,970, 4,395,460, 4,404,153, 4,340,619, 4,540,803, 4,482,689, 4,397,828, 4,543,344, 4,835,238, 4,774,312, 4,929,742, 4,916,200, 5,030,744, 4,656,300 and 4,689,252. Examples from the European perspective are EP-As 0,332,374 and 0,351,747. Literature examples are provided by Burns et al., J. Mater. Sci., 22 (1987), pp2609-2614.

The polysilazane may also be substituted with various metal groups (i.e., containing repeating metal-N-Si units). Examples of suitable compounds include borosilazanes which are known in the art include US-As 4,910,173, 4,482,689, 5,164,344, 5,252,684, 5,169,908 and 5,030,744 or those described in EP-A 0,364,323. Teachings from the literature include Seyferth et al., J. Am. Ceram. Soc. 73, 2131-2133 (1990) and Noth, B. Anorg. Chem. Org. Chem., 16(9), 618-21, (1961).

The preferred polymers used herein are those of US-A 4,540,803. These polysilazanes are prepared by a method which comprises contacting and reacting in an inert essentially anhydrous atmosphere, trichlorosilane and a disilazane at a temperature in the range of 25 to 300°C. while distilling volatile byproducts. The disilazane has the formula $(R_3Si)_2NH$ where R is selected from the group consisting of vinyl, hydrogen, phenyl and alkyl radicals containing 1 to 3 carbon atoms.

An especially preferred embodiment of that patent involves the reaction of trichlorosilane with hexamethyldisilazane. The resultant polymer produced thereby, hydridopolysilazane, has been shown to have valuable preceramic properties.

While the polymers of US-A 4,540,803 are specifically useful herein, nearly any polysilazane with Si-H bonds may be used in our invention.

The crosslinker of the present invention is an alkenyl functional silazane oligomer of the following general formula: $R^{iv}R^vR^{vi}SiNR^{vii}[R^{viii}R^{ix}SiNR^x]_nSiR^{xi}R^{xii}R^{xiii}$ Each $R^{iv}$, $R^v$, $R^{vi}$, $R^{vii}$, $R^{viii}$, $R^{ix}$, $R^x$, $R^{xi}$, $R^{xii}$ and $R^{xiii}$ is independently a hydrogen atom, a hydrocarbon of 1-20 carbon atoms or a hydrocarbon of 1-20 carbon atoms substituted with a hetero group such as silicon, nitrogen or boron. Specific examples include alkyls such as methyl, ethyl, propyl and butyl; alkenyls such as vinyl, allyl or hexenyl, aryls such as phenyl; cycloalkyls such as cyclohexyl; and alkaryls. Additionally, these hydrocarbon radicals can contain hetero atoms such as silicon or nitrogen to produce groups such as alkylaminos, alkylsilyls, alkylboryls, aminoalkyls and silyl groups. At least 1 of the R groups in this formula must be an alkenyl with vinyl and hexenyl being preferred. In this formula n is 0-4.

The method of making these functional oligomers is not critical to the invention. One acceptable method is the reaction of a silazane oligomer with a functional chlorosilane and is exemplified by the following:

$$Me_3SiNH\text{-containing oligomer} + Me_2RSiCl \text{ --------------> } Me_2RSiNH + Me_3SiCl$$

wherein R is an alkenyl such as vinyl, allyl or hexenyl.

An alternative method of oligomer making is via the reaction:

$$(Me_3Si)_2NH + (Me_2RSi)_2 + HSiCl_3 \text{ -----> } R\text{-Silazane} + Me_2ViSiCl + Me_3SiCl$$

wherein R is again defined as above.

Although only 2 methods for forming the alkenyl functional oligomer are provided herein, nearly any method which produces the desired oligomer can be used herein.

Also included in the mixture is a crosslinking promoter (curing agent). Conventional crosslinking promoters which are useful in the present invention are also well known in the art. Examples include organic peroxides such as dibenzoyl peroxide, bis-p-chlorobenzol peroxide, bis-2,4-dichlorobenzol peroxide, di-t-butyl peroxide, dicumyl peroxide, t-butyl perbenzoate, 2,5-bis(t-butylperoxy)-2,3-dimethylhexane and t-butyl peracetate; or platinum-containing crosslinking promoters such as platinum metal, $H_2PtCl_6$ and $((C_4H_9)_3P)_2PtCl_2$. Other conventional crosslinking promoters known in the art may also be used.

The crosslinking promoter is present in an effective amount, i.e. an amount sufficient to induce crosslinking in the polymer. Therefore, the actual amount of the crosslinking promoter will depend on the activity of the actual agent used and the amount of polymer present. Normally, however, the peroxide curing agent will be present at 0.1 to 5.0 weight percent, based on the weight of the compound to be cured, with the preferred amount being 2.0 weight percent. When platinum-containing curing agents are used, the amount will normally be such that platinum is present at 1 to 1000 ppm, based on the weight of the compound to be cured, with the preferred amount being 50 to 150 ppm of platinum metal.

The above crosslinkers, crosslinking promoters and polysilazanes are mixed and the crosslinking reaction is then initiated. They may be mixed in their liquid state or, alternatively, they may be blended in a solvent.

If a solvent is used, it may include any solvent which acts as a solvent for the polysilazane, the crosslinker or the crosslinking promoter and which does not cause rearrangement of these species. Examples of such solvents include alkanes such as pentane, hexane, heptane and octane; ethers such as tetrahydrofuran or aromatic hydrocarbons such as benzene, toluene and xylene.

The crosslinker and the polysilazane are blended in nearly any ratio desired to provide sufficient flow and final cure. Usually, however, the crosslinker is present in an amount of at least 0.01 wt% of crosslinker, based on the weight of the polysilazane, with a range of 0.01 to 50 wt% being preferred. In addition, it is also contemplated herein that several polysilazanes (eg., of varying viscosity), several crosslinkers or other desirable materials (eg., ceramic fillers) may be blended with the mixture to provide desirable properties.

When the crosslinkers are blended in small amounts (e.g., 10-25 wt%) with high molecular weight polysilazanes (eg., 10,000 Mw), they are especially valuable in our invention as materials used to initially impregnate an assembly of fibers in the production of a CMC (i.e., pre-preg resins). These findings are especially surprising since solvents are generally not necessary to control viscosity and, thus, they are more volume efficient than organic solutions of silazane polymers.

Our polysilazane/crosslinker/promoter mixture is then exposed to conditions which facilitate the crosslinking reaction. Usually, this involves merely heating the mixture to a sufficient temperature in the range of 50-500°C. Preferred temperatures are in the range of 75-300°C. Other means of inducing crosslinking, such as radiation, are also contemplated.

The claimed ranges of polysilazane/crosslinker/-promoter preceramic mixtures are especially useful in the formation of matrices for ceramic matrix composites. In addition, however, the material may be used for other purposes such as the formation of ceramic monoliths or ceramic fibers and to further impregnate porous ceramic bodies to increase density. These mixtures are especially useful since they flow when forming the composite to coat and fill voids; they are employed without organic solvents; they have a stable ceramic char; they are easily deep section curable; and they have a high char yield.

If used to form a composite, our polysilazane/crosslinker/promoter preceramic mixture (preceramic mixture) is used in a polymer infiltration process. This process comprises first impregnating an assembly of fibers with the above mixture and, if desired, fillers.

Examples of refractory fibers include those of silicon carbide, silicon nitride, silicon carbide deposited on a carbon core, aluminum borate, aluminum oxide, silicon oxide, silicon carbide containing titanium, silicon oxycarbides, silicon oxycarbonitrides, carbon and the like.

The above fibers may also be provided with a coating to toughen the composite by preventing bonding and chemical reactions between the fibers and the matrix. This allows the fibers to debond and pullout under stress such that the composite does not undergo catastrophic failure as demonstrated by ceramic monoliths. Examples of coatings include carbon, boron nitride, silicon carbide, silicon nitride, aluminum nitride and their combinations in thicknesses of 0.05 to 1.0 micrometer.

If desired, the preceramic mixtures of this invention may also contain fillers. Fillers are used to decrease the amount of matrix shrinkage which occurs on pyrolysis; so the resultant composites have lower porosity. Suitable fillers are known in the art and include, for example, powders, whiskers or particulates of alumina, silica, other metal oxides, silicon carbide, silicon nitride, silicon hexaboride, aluminum nitride and boron nitride.

The assembly of fibers are impregnated with the preceramic mixture by any convenient means. For instance, the fibers are immersed in the mixture; sprayed with the mixture; or held under a stream of the mixture. The impregnated assembly of fibers can additionally be manipulated to uniformly distribute the matrix mixture throughout the fibers. Following impregnation, any excess matrix mixture on the fibers is allowed to drain off. The resultant fibers are commonly called a "pre-preg".

The prepregs are then partially cured so they will hold the shape imparted in a subsequent step. This partial curing, also called "B-staging", is generally accomplished by heating in air at a temperature in the range of 50 to 500°C. for 2 minutes to 4 hours.

The prepreg is then subjected to externally applied pressure while heating to form the composite into the desired shape and to cause uniformity of resin about the fibers. Typically, this is accomplished by pressing the prepreg into a mold at a temperature and pressure which allows the resin to flow throughout the mold.

The formed prepreg is next cured to insure complete or nearly complete crosslinking such that it will not deform on subsequent pyrolysis. Any schedule as discussed above which produces the desired result may be used so long as the temperature does not cause ceramification. This curing step may be performed in the mold under pressure or it may be accomplished in a conventional oven under nitrogen without any applied pressure.

The pressed and cured product (green composite or molded part) is then slowly fired in a furnace to a temperature of at least 1000°C. in an inert atmosphere or vacuum until the product ceramifies. It is preferred that the green composite be fired at a temperature of 1200°C.

The composites formed by the above process are generally quite porous. Since it may be preferred to produce dense objects (which have higher strength and greater oxidation resistance), these composites may be reimpregnated. This is accomplished by merely impregnating the composite with the preceramic mixture (without fillers) as described above; curing the reimpregnated composite and then firing. This "reimpregnation" can be repeated (for example up to 15 or 20 times) until products with the desired density (for example < 5 %) and appropriate strengths are achieved.

Experimental Section

*I. Materials* HPZ is hydridopolysilazane prepared by the method of US-A 4,540,803 and the silazane oligomers are a by-product of this process. Lupersol™ 101 (2,5-dimethyl-2,5(t-butylperoxy)hexane) (PennWalt Corp.), Dicup® (dicumyl peroxide) (PennWalt Corp.) and toluene (Fisher) were used as supplied.

Polymer pyrolysis was carried out in a Lindberg™ Model 54434 or similar tube furnace equipped with Eurotherm™ temperature controllers. In a typical pyrolysis, a sample was weighed (approximately 4.0 grams) and placed in an alumina boat and loaded into the furnace. The furnace was then purged with argon at a rate sufficient to achieve one turnover of the furnace atmosphere every 3 minutes. After purging 45 to 60 minutes, the flow was reduced to allow for a turnover every 6 minutes and the temperature was raised to a final temperature and held 60 minutes. The ceramic sample was then reweighed and ground for testing and analysis.

Oxidation testing of polymer-derived ceramic chars was also carried out in a Lindberg™ Model 54434 or similar tube furnace equipped with Eurotherm™ temperature controllers. In a typical oxidation, a sample was weighed out (approximately 0.5 grams) and placed in an alumina boat and loaded into the furnace. The furnace was then opened to the atmosphere and heated at a rate of 10°C./minute to 1000°C. where it was held for 10 hours before cooling to ambient temperature. The ceramic sample was then reweighed and analyzed.

*II. Analysis* Carbon, hydrogen and nitrogen analysis were done on a Perkin Elemer™ 2400 analyzer. Oxygen analysis were done on a Leco™ Oxygen Analyzer Model RO-316 equipped with an oxygen determinator 316 (Model 783700) and an electrode furnace EF100. Silicon analysis was determined by a fusion technique which consisted of converting the solid to a soluble form and analyzing the solute for total silicon by Arl 3580 ICP-AES analysis.

Examples 1 and 2

**Silazane Oligomer Derivatization**

The derivatization of silazane oligomers with $Me_2ViSiCl$ is described to illustrate the typical derivatization procedure.

A one-liter, three-neck, round-bottom flask, air driven stirrer, pot thermometer, gas liquid chromotography (GLC) sample port, condenser and argon/vacuum inlet were dried and set up under an argon atmosphere. Silazane oligomers (from the HPZ process above) and $Me_2ViSiCl$ were added at an equivalent ratio of 1.0 eq. of silazane oligomers (146.2g) to 2.0 eq. of $Me_2ViSiCl$ (121.4 g). Dodecane internal GLC standard (12.12 g) was added and the reaction was refluxed under argon at 85°C. pot temperature with GLC monitoring. After 55 hours of reflux time, the reaction slowed from an initial moderate rate to a very slow rate with results indicating 31% reaction completion. At this point, the set up was modified with a glass-bead, packed distillation column and receiver. Then, the reaction was heated slowly to 160°C. pot temperature in an attempt to force the reaction to further completion by selective $Me_3SiCl$ distillation. A total of 82.5 grams of volatiles resulted from this distillation. Next, the reaction set up was then modified for direct path reduced pressure distillation and the reaction was stripped to 140°C. pot temperature under 0.27 kPa (2 mm Hg) pressure. The resulting product was dissolved in toluene (102.2 g), reacted with excess $NH_3$ (1 hour sparge) to ensure chloride conversion, then filtered through a medium glass frit filter and finally roto-vapped stripped to yield 98.7 grams of translucent, straw-colored liquid (Example 1).

Derivatization of silazane oligomers with $hexenylMe_2SiCl$ was performed using a set up and procedure similar to the above.

Silazane oligomers (from the above HPZ process) and $hexenylMe_2SiCl$ were added at an equivalent ratio of 1.0 eq. of silazane oligomers (72.7g) to 2.0 eq. of $hexenylMe_2SiCl$ ( 88.7 g). Dodecane internal GLC standard (8.92 g) was added and the reaction was refluxed under argon at 97°C. pot temperature with GLC monitoring. The reaction was refluxed 102 hours and then processed similar to above to yield 70.0 grams of clear, dark-straw colored liquid Example 2.

Example 1 and 2 products are summarized in Table 1.

Table 1.

| Silazane Crosslinkers from Silazane Derivatization with RMe₂SiCl | | | | | | |
|---|---|---|---|---|---|---|
| Ex. # | olig. grms. | Derivatization Reagent/wt. g | olig./RVi Eq./Eq. | Prod. Yield grams | Dist.Yield grams | Product Appear. |
| 1 | 146.2 | Me₂ViSiCl/121.4 | 1.0 / 2.0 | 98.7 | 143.5 | translucent straw liquid |
| 2 | 72.7 | HexenylMe₂SiCl/ 88.7 | 1.0 / 2.0 | 70.0 | 74.0 | clear dark straw liquid |

**Cure, Pyrolysis and Ceramic Oxidation Testing Derivatized Silazanes without HPZ**

Five gram aliquots of the crosslinkers from Example 1 and Example 2 were then mixed with 2.0 wt.% Lupersol™ 101, then cured 10 minutes at 175°C. under argon and subsequently pyrolyzed to 1200°C. under argon. The resulting chars were evaluated for ceramic yield and C, N and O content. Results are summarized Table 2-A.

Table 2-A.

| Pyrolysis of Derivatized Silazane Oligomers without HPZ | | | | | |
|---|---|---|---|---|---|
| Ex. # | Crosslinker | *Ceramic Yield wt. % | C wt.% | N wt.% | O wt.% |
| 1 | Me₂ViSiCl derived (Ex.1) | 54.4 | 16.6 | 24.6 | 1.3 |
| 2 | HexenylMe₂SiCl derived (Ex.2) | 44.8 | 18.8 | 23.7 | 1.7 |

Indicates blend with 2.0 wt% Lupersol™ 101, then cure of 10 min. at 175°C. under argon and pyrolysis to 1200°C. under argon.

Aliquots (0.25 gram) of the chars from Example 1 and Example 2 were oxidized 10 hours at 1000°C. and the resulting oxidized chars were evaluated for oxidized weight change, appearance and C, N and O content. Results are summarized in Table 2-B.

Table 2-B.

| Oxidation of Derivatized Silazane Oligomer Chars without HPZ | | | | | | |
|---|---|---|---|---|---|---|
| Ex. # | Crosslinker Char | *Oxidation Wt. change % | Oxidation appearance | C wt. % | N wt. % | O wt. % |
| 1 | Me₂ViSiCl derived (Ex.1) | +1.6 | black | 13.5 | 22.3 | 5.5 |
| 2 | HexenylMe₂SiCl derived (Ex.2) | +0.8 | black | 16.0 | 21.9 | 6.6 |

* Indicates oxidation of 10 hours at 1000°C.

**Derivatized Silazane Crosslinker/HPZ Blends**

The crosslinkers of Example 1 and Example 2 were blended with HPZ and Lupersol™ 101 to yield formulations of 28 wt.% crosslinker, 70 wt.% HPZ and 2.0 wt.% Lupersol™ 101. Five gram aliquots of both blends were cured 10 minutes at 175°C. under argon and then pyrolyzed to 1200°C. under N₂. The resulting chars were analyzed for ceramic yield and C, N and O content with the results summarized in Table 3-A.

Table 3-A.

| Pyrolysis of Silazane Crosslinker/HPZ Blends | | | | | | | |
|---|---|---|---|---|---|---|---|
| Ex. # | Crosslinker (Derivatization reagent) | X-link wt. | HPZ wt. | *Ceramic Yield wt.% | C wt.% | N wt.% | O wt.% |
| 1 | Me₂ViSiCl | 28 | 70 | 62.5 | 13.6 | 26.2 | 1.4 |
| 2 | HexenylMe₂SiCl | 28 | 70 | 57.1 | 14.6 | 25.6 | 1.7 |

* Indicates cure of 10 min. at 175°C. under argon and pyrolysis to 1200°C. under N₂

Aliquots (0.25 gram) of these chars were oxidized 10 hours at 1000°C. and the resulting oxidized chars were analyzed for oxidized weight change, appearance and Si, C, N and O content. Results are summarized in Table 3-B.

Table 3-B.

| Oxidation of Chars Derized from Vinyl Silazane Crosslinker / HPZ Blends | | | | | | | | | |
|---|---|---|---|---|---|---|---|---|---|
| Ex. # | Crosslinker (Derivatization reagent) | X-link wt. | HPZ wt. | *Oxid. Wt. change% | Oxid. appearance | Si wt. % | C wt. % | N wt. % | O wt. % |
| 1 | Me$_2$ViSiCl | 28 | 70 | +2.9 | black | 54.3 | 10.2 | 22.3 | 10.2 |
| 2 | HexenylMe$_2$SiCl | 28 | 70 | +6.5 | black | 51.5 | 7.8 | 17.2 | 19.6 |

* Indicates oxidation of 10 hours at 1000°C.

Examples 3 and 4

**Functional Silazane Crosslinker/HPZ Blends for Composite Testing**

Preparation of the composite testing blend, prepared from the Me$_2$ViSiCl derived crosslinker and HPZ, will next be described to illustrate blend preperation for composite fabrication and testing.

Example 3

A blend formulation of 28.6 wt% Me$_2$ViSiCl derived crosslinker from Example 1 and 71.4 wt% HPZ solids was prepared by combining 16.6 grams of the neat crosslinker described in Example I with 41.4 grams of HPZ solids and 42.0 grams of xylene in a dried 250 ml Wheaton™ bottle. The blend was mixed one hour on a rotational ball mill type mixer to afford a prepreg resin formulation.

Example 4

A blend formulation of 28.6 wt% hexenylMe$_2$SiCl derived crosslinker from Example 2 and 71.4 wt% HPZ solids was prepared using the same crosslinker described in Example 2 and the above procedure to also afford a prepreg resin formulation.

**Composite Preparation and Testing**

Example 3

A slurry of BN (11.7 g), the resin (80 g) prepared in Example 3 and Dicup® (0.5 g) was used to impregnate a piece of heat-treated, BN-coated, Ceramic Grade, 8 harness satin weave Nicalon™ cloth (~55 g). The cloth was cut into six 15 x 15 cm pieces which were stacked, warp aligned, vacuum-bagged, heated to 24°C. before applying 0.03 kg/m$^2$ and then heated further to 230°C. for 6 hours. The cured plate had a thickness of 2.3 mm. The plate was pyrolyzed to 1200°C. under inert atmosphere at 2.2°C./min. to 285°C.; holding for 20 hours; heating at 0.8°C./min to 1000°C.; holding for 1 hour; heating at 3.3°C./min. to 1200°C.; holding for two hours; and then allowing the furnace to cool to room temperature. The pyrolyzed plate had a thickness of 2.35 mm, an apparent porosity of 27.5% and an average density of 1.74 g/cm$^3$. The plate was repeatedly densified with HPZ polymer solution. The pyrolysis cycle used for densification included heating at 2.2°C./min. to 285°C.; holding for two hours; heating at 2.5°C./min. to 1200°C.; holding for two hours; and then cooling to room temperature. After the third pyrolysis cycle, the plate was cut into 2.5 x 5 cm samples with a diamond saw and the individual plates were further densified with HPZ polymer solution and pyrolysis. The testing and results of static oxidation of these samples are summarized in Table 4.

Example 4

A slurry of BN (11.7 g), the resin (80 g) prepared in Example 4 and Dicup® (0.5 g) was used to impregnate a piece of heat-treated, BN-coated, Ceramic Grade, 8 harness satin weave Nicalon™ cloth (~55 g). The cloth was cut into six 15 x 15 cm pieces which were stacked, warp alligned, vacuum-bagged, heated to 24°C. before applying 0.03 kg/m$^2$ and then heated further to 230°C. for 6 hours. The cured plate had a thickness of 2.39 mm. The plate was pyrolyzed to 1200°C. under inert atmosphere at 2.2°C./min. to 285°C.; holding for 20 hours; heating at 0.8°C./min. to 1000°C.;

holding for 1 hour; heating at 3.3°C./min. to 1200°C.; holding for two hours; and then allowing the furnace to cool to room temperature. The pyrolyzed plate had a thickness of 2.38 mm, an apparent porosity of 30.6 % and an average density of 1.66 g/cm$^3$. The plate was repeatedly densified with HPZ polymer solution. The pyrolysis cycle used for densification included heating at 2.2°C./min. to 285°C.; holding for two hours; heating at 2.5°C./min. to 1200°C.; holding for two hours; and then cooling to room temperature. After the third pyrolysis cycle, the plate was cut into 2.5 x 5 cm samples with a diamond saw and the individual plates were further densified with HPZ polymer solution and pyrolysis. The testing and results of static oxidation of these samples are summarized in Table 4.

Example 5

A slurry of BN (12.5 g), the resin (80 g) prepared in Example 2 of US-A 5,364,920 was used to impregnate a piece of heat-treated, BN-coated, Ceramic Grade, 8 harness satin weave Nicalon™ cloth (~55 g). The cloth was cut into six 10 x 10 cm pieces which were stacked, warp alligned, vacuum-bagged, heated to 24°C. before applying 0.03 kg/m$^2$ and then heated further to 230°C. for 6 hours. The cured plate had a thickness of 2.6 mm (104 mils). The plate was pyrolyzed to 1200°C. under inert atmosphere at 2.2°C./min. to 285°C.; holding for 20 hours; heating at 0.8°C./min. to 1000°C.; holding for 1 hour; heating at 3.3°C./min. to 1200°C.; holding for two hours; and then allowing the furnace to cool to room temperature. The pyrolyzed plate had a thickness of 2.52 mm, an apparent porosity of 32.3 % and an average density of 1.67 g/cm$^3$. The plate was repeatedly densified with HPZ polymer solution. The pyrolysis cycle used for densification included heating at 2.2°C./min. to 285°C.; holding for two hours; heating at 2.5°C./min. to 1200°C.; holding for two hours; and then cooling to room temperature. After the third pyrolysis cycle, the plate was cut into 2.5 x 5 mm samples with a diamond saw and the individual plates were further densified with HPZ polymer solution and pyrolysis. The testing and results of static oxidation of these samples are summarized in Table 4.

Table 4

| Oxidation Temp. C Porosity % | Example 3 1000 | Example 3 1200 | Example 4 1000 | Example 4 1200 | Example 5 1000 | Example 5 1200 |
|---|---|---|---|---|---|---|
| 0 hr | 3.70 | 3.70 | 4.70 | 4.70 | 3.73 | 3.73 |
| 100 hr | 8.66 | 5.54 | 9.18 | 6.17 | 7.43 | 5.16 |
| 500 hr | 6.38 | 7.84 | 6.59 | 7.80 | 4.98 | 6.06 |
| 1000 hr | 6.75 | 6.90 | 5.79 | 6.42 | 5.75 | 5.35 |
| Density g/cm$^3$ | | | | | | |
| 0 hr | 2.11 | 2.11 | 2.09 | 2.09 | 2.13 | 2.13 |
| 100 hr | 2.18 | 2.20 | 2.16 | 2.19 | 2.13 | 2.14 |
| 500 hr | 2.20 | 2.20 | 2.18 | 2.20 | 2.16 | 2.16 |
| 1000 hr | 2.19 | 2.20 | 2.19 | 2.19 | 2.14 | 2.17 |
| Flexural Strength GPa | | | | | | |
| 0 hr | 0.458 | 0.458 | 0.440 | 0.440 | 0.464 | 0.464 |
| 100 hr | 0.400 | 0.334 | 0.450 | 0.367 | 0.352 | 0.365 |
| 500 hr | 0.333 | 0.245 | 0.413 | 0.302 | 0.334 | 0.290 |
| 1000 hr | 0.299 | 0.181 | 0.339 | 0.239 | 0.253 | 0.203 |

These results show that composites prepared with our claimed materials as resins show retention of strength even under oxidative conditions.

**Examples 6 - 10**

Crosslinker Preparation

Vinyl functional silazane oligomers were prepared by combining $(Me_3Si)_2NH$ and $(Me_2ViSi)_2NH$ and by then reacting this combination with $HSiCl_3$. The reactions were performed using a 1 to 2.58 mole ratio of $HSiCl_3$ to silazane. Five different crosslinkers were produced using the formulations listed in Table 5. The reactions were done in 2 L, 3-neck flasks fitted with condensers. The silazane components and the xylene were added directly to the flask while the $HSiCl_3$ was added through an addition funnel. The $HSiCl_3$ was added over the period of 1 hour.

In a typical example, the reagents were combined and the mixture was allowed to stir for three days before continuing with the production of the crosslinkers themselves. After that time, the mixtures were distilled to remove waste products and to leave a crude mixture of low molecular weight crosslinker and oligomers. The reactions were then heated to 150°C. over 2-3 hours with a vacuum applied at the end of the heating cycle. After distillation was complete, the product in the flask was cooled and a neat sample was collected for IR. The IR was checked to verify that the materials contained a vinyl component. Next, the product was dissolved in xylene at 65 % solids. The resulting solution was then treated with $NH_3$ to remove any unreacted Cl. The $NH_3$ was added as a gas mixed with 5 % argon for 1 hr. The $NH_3$ was then turned off and the flask was left under an argon purge overnight. The materials were later filtered to remove any remaining $NH_4Cl$ salts. The flasks were rinsed with xylene to capture as much of the product as possible and to leave the filtered material at approximately 50% solids.

Table 5

| Crosslinker Formulations | | | | |
| --- | --- | --- | --- | --- |
| Example Number | $HSiCl_3$ | $(Me_3Si)_2NH$ | $(Me_2ViSi)_2NH$ | Xylene |
| 6 | 203.1 g | 623.1 g | 0.0 g | 156.0 g |
| 7 | 203.1 g | 466.1 g | 177.6 g | 156.0 g |
| 8 | 203.1 g | 11.5 g | 357.9 g | 156.0 g |
| 9 | 189.5 g | 145.3 g | 501.1 g | 145.6 g |
| 10 | 203.1 g | 0.0 g | 715.9 g | 156.0 g |

Samples were then submitted for TMA, GPC and NMR. The samples for Tg were dried for 1 hour in a DSC to remove solvent and then the Tg by TMA was determined. The GPC was done using samples of the final product without any changes. The samples for NMR were dried using a rotovap to remove xylene and then the dried material was dissolved in benzene at 10 % solids for NMR.

Table 6
Test Results

| Silazane ratio HMDZ / (Me$_2$ViSi)$_2$NH | Example | Formula (by NMR) | GPC Mw/Mn | TMA 800 Tg |
|---|---|---|---|---|
| 100/0 | 6 | (HSi)$_1$(Me$_3$Si).68(NH).68 | 2,665/1,325 | -24.06 C |
| 75/25 | 7 | (HSi)$_1$(Me$_3$Si).71(Me$_2$ViSi).16(NH).86 | 3,114/1,219 | -12.02 C |
| 50/50 | 8 | (HSi)$_1$(Me$_3$Si).52(Me$_2$ViSi).36(NH).88 | 4,682/1,853 | -8.85 C |
| 25/75 | 9 | (HSi)$_1$(Me$_3$Si).20(Me$_2$ViSi).67(NH).87 | 10,435/1,412 | -6.87 C |
| 0/100 | 10 | (HSi)$_1$(Me$_3$Si).25(Me$_2$ViSi).76(NH).43 | 8,933/1,774 | -17.97 C |

Curing and Pyrolysis

An aliquot of the above materials (40 g) was mixed with 1 wt% Lupersol™ 101 and heated to 150-175°C. for 20 to 45 minutes. An aliquot of the cured polymer (4 g) was placed in a graphite crucible and heated under a continuous argon purge in a Lindberg™ Model 54434 furnace at 5°C./min. to 1200°C. and held at temperature for one hour, before cooling to ambient temperature. The ceramic yield was calculated and the sample was also analyzed as described above. The results are summarized in Table 7.

**Ceramic Oxidation Testing**

In a typical oxidation test, a sample was weighed (0.5 gram) and placed in an alumina boat and loaded into the furnace. The furnace was then opened to the atmosphere and heated at a rate of 10°C./minute to 1000°C., where it was held for 10 hours before cooling to ambient temperature.
The ceramic sample was then reweighed and analyzed.
These results are also summarized in Table 7.

Table 7
Results of Oxidation

| Example Number 12184 | Blend X-linker %Vi | HPZ wt. | x-linker wt. | Tg °C | Ceramic Yield % | Appear | C | N | Oxidation wt. gain % | Appear | C | N |
|---|---|---|---|---|---|---|---|---|---|---|---|---|
| 6 | 0 | 90 | 10 | - | 63.1 | foam | 11.6 | 28.3 | 0.14 | Black | 11.7 | 28.7 |
| 6 | 0 | 85 | 15 | - | 61.3 | " | 11.7 | 27.9 | 0.14 | " | 12.2 | 28.3 |
| 6 | 0 | 75 | 25 | - | 59.3 | " | 11.6 | 27.6 | 0.29 | " | 11.6 | 28.3 |
| 7 | 25 | 90 | 10 | 46.5 | 58.8 | foam | 12.1 | 28.5 | 0.14 | " | 12.6 | 28.4 |
| 7 | 25 | 85 | 15 | - | 58.8 | " | 12.7 | 28.3 | 0.19 | " | 12.7 | 28.2 |
| 7 | 25 | 75 | 25 | - | 58.2 | fused | 13.1 | 28.2 | 1.03 | " | 12.2 | 26.9 |
| 8 | 50 | 90 | 10 | 48.2 | 64.2 | " | 12.1 | 28.0 | 0.35 | " | 11.8 | 28.0 |
| 8 | 50 | 85 | 15 | 44.7 | 63.5 | " | 12.6 | 27.5 | 0.30 | " | 12.5 | 27.7 |
| 8 | 50 | 75 | 25 | 32.0 | 62.0 | " | 13.0 | 27.4 | 0.35 | " | 12.8 | 27.7 |
| 9 | 75 | 90 | 10 | 47.9 | 63.4 | " | 12.3 | 27.7 | 0.31 | " | 11.9 | 28.0 |
| 9 | 75 | 85 | 15 | 39.5 | 64.6 | " | 13.4 | 27.2 | 0.29 | " | 13.1 | 27.7 |
| 9 | 75 | 75 | 25 | 37.7 | 64.2 | " | 14.5 | 27.8 | 0.45 | " | 13.1 | 26.9 |
| 10 | 100 | 90 | 10 | 49.3 | 64.6 | " | 12.7 | 27.7 | 0.32 | " | 12.3 | 28.0 |
| 10 | 100 | 85 | 15 | 48.1 | 65.0 | " | 13.7 | 27.4 | 0.42 | " | 13.0 | 27.5 |
| 10 | 100 | 75 | 25 | 39.8 | 65.0 | " | 14.3 | 27.0 | 0.55 | " | 12.8 | 26.5 |

EP 0 808 863 A2

Examples 11 and 12

**Functional Silazane Crosslinker/HPZ Blends for Composite Testing**

Example 11

A blend of 15 wt% crosslinker and 85 wt% HPZ solids was prepared by combining 10.5 grams of the neat crosslinker described in Example 8 with 59.5 grams of HPZ and 48.3 grams of xylene in a dried 250 ml Wheaton™ bottle. The blend was mixed one hour on a rotational ball mill type mixer to afford a prepreg resin formulation.

Example 12

A blend formulation of 25 wt% crosslinker and 75 wt% HPZ was prepared by combining 17.5 grams of the neat crosslinker described in Example 2 with 52.5 grams of HPZ and 49.2 grams of xylene in a dried 250 ml Wheaton™ bottle. The blend was mixed one hour on a rotational ball mill type mixer to afford prepreg resin formulation.

**Composite Preparation and Testing**

Example 11

A slurry of BN (12.5 g) in a solution of the resin prepared in Example 11 (85.8 g) and Dicup® (0.5 g) was used to impregnate a piece of heat-treated, BN-coated, Ceramic Grade, 8 harness satin weave Nicalon® cloth (~55 g). The cloth was cut into six 15 x 15 cm pieces which were stacked, warp aligned, vacuum-bagged, heated to 24°C. before applying 0.3 kg/m$^2$ and heated further to 230°C. for 6 hours. The cured plate had a thickness of 2.48 mm. The plate was pyrolyzed to 1200°C. under inert atmosphere at 2.2°C./min. to 285°C., holding for 20 hours; heating at 0.8°C./min. to 1000°C., holding for 1 hour, heating at 3.3°C./min. to 1200°C., holding for two hours and then allowing the furnace to cool to room temperature. The pyrolyzed plate had a thickness of 2.41 mm, an apparent porosity of 7.94% and an average density of 1.655 g/cm$^3$. The plate was repeatedly densified with HPZ polymer solution. The pyrolysis cycle used for densification included heating at 2.2°C./min. to 285°C.; holding for two hours; heating at 2.5°C./min. to 1200°C., holding for two hours and then cooling to room temperature. After the third pyrolysis cycle, the plate was cut into 2.5 x 5 cm samples with a diamond saw and the individual plates were further densified with HPZ polymer solution and pyrolysis. The testing and results of static oxidation of these samples are summarized in Table 8.

Example 12

A slurry of BN (12.5 g) a solution of resin (85.8 g) prepared in Example 12 and Dicup® (0.5 g) was used to impregnate a piece of heat-treated, BN-coated, Ceramic Grade, 8 harness satin weave Nicalon™ cloth (~55 g). The cloth was cut into six 15 x 15 cm pieces which were stacked, warp aligned, vacuum-bagged, heated to 24°C. before applying 0.03 kg/m$^2$ and heated further to 230°C. for 6 hours. The cured plate had a thickness of 2.42 mm. The plate was pyrolyzed to 1200°C. under inert atmosphere at 2.2°C./min. to 285°C.; holding for 20 hours; heating at 0.8°C./min. to 1000°C.; holding for 1 hour; heating at 3.3°C./min. to 1200°C.; holding for two hours and then allowing the furnace to cool to room temperature. The pyrolyzed plate had a thickness of 2.39 mm, an apparent porosity of 7.9 % and an average density of 1.7 g/cm$^3$. The plate was repeatedly densified with HPZ polymer solution. The pyrolysis cycle used for densification included heating at 2.2°C./min. to 285°C.; holding for two hours; heating at 2.5°C./min. to 1200°C.; holding for two hours and then cooling to room temperature. After the third pyrolysis cycle, the plate was cut into 2.5 X 5 cm samples with a diamond saw and the individual plates were further densified with HPZ polymer solution and pyrolysis. The testing and results of static oxidation of these samples are summarized in Table 8.

Table 8

| | Example 11 | Example 11 | Example 12 | Example 12 |
|---|---|---|---|---|
| Oxidation Temps. C Porosity % | 1000 | 1200 | 1000 | 1200 |
| 0 hr | 4.13 | 4.13 | 3.28 | 3.28 |
| 100 hr | 6.83 | 5.78 | 3.91 | 5.93 |
| 500 hr | 5.71 | 4.95 | 3.98 | 4.51 |
| 1000 hr | 4.91 | 7.09 | 4.72 | 5.34 |

Table 8   (continued)

|  | Example 11 | Example 11 | Example 12 | Example 12 |
|---|---|---|---|---|
| Density g/cm$^3$ |  |  |  |  |
| 0 hr | 2.11 | 2.11 | 2.10 | 2.10 |
| 100 hr | 2.17 | 2.16 | 2.15 | 2.18 |
| 500 hr | 2.17 | 2.19 | 2.20 | 2.18 |
| 1000 hr | 2.19 | 2.17 | 2.19 | 2.19 |
| Flexural Strength GPa |  |  |  |  |
| 0 hr | 0.392 | 0.392 | 0.452 | 0.452 |
| 100 hr | 0.315 | 0.231 | 0.367 | 0.263 |
| 500 hr | 0.233 | 0.269 | 0.277 | 0.240 |
| 1000 hr | 0.215 | 0.250 | 0.264 | 0.272 |

## Claims

1. A method of crosslinking a silazane polymer comprising (i) preparing a mixture comprising a silazane polymer having Si-H bonds, a crosslinker comprising a silazane oligomer having an alkenyl group and a crosslinking promoter; and (ii) heating the mixture to a temperature sufficient to crosslink the silazane polymer.

2. The method of claim 1 wherein the silazane polymer comprises hydridopolysilazane.

3. The method of claim 1 wherein the silazane polymer is present in an amount of from 50 to 9 wt percent of the mixture.

4. The method of claim 1 wherein the crosslinker comprises an oligomer of the structure
   $R^{iv}R^vR^{vi}SiNR^{vii}[R^{viii}R^{ix}SiNR^x]_nSiR^{xi}R^{xii}R^{xiii}$ wherein $R^v$, $R^{vi}$ $R^{vii}$, $R^{viii}$, $R^{ix}$, $R^x$, $R^{xi}$, $R^{xii}$ and $R^{xiii}$ are independently hydrogen atoms, hydrocarbons of 1-20 carbon atoms or hydrocarbons of 1-20 carbon atoms substituted with silicon, nitrogen or boron, provided that at least one R is an alkenyl and n is 0-4.

5. The method of claim 1 wherein the crosslinker is present in an amount of from 1 to 50 weight of the mixture.

6. The method of claim 1 wherein the crosslinking promoter is a peroxide.

7. The method of claim 1 wherein the mixture is heated at a temperature in the range of 50 to 500°C.

8. A method of forming a pre-preg comprising (a) preparing the mixture of claim 1; (b) impregnating an assembly of fibers with the (a); and (c) heating the impregnated assembly to a temperature sufficient to crosslink silazane polymer.

9. The method of claim 8 wherein the mixture contains a filler.

10. A method of forming a ceramic matrix composite obtainable by pyrolyzing the pre-preg of claim 8 to a temperature sufficient to form an oxidatively stable ceramic matrix composite.

11. A solvent free method of densifying a porous ceramic comprising (I) preparing the mixture of claim 1; (II) impregnating a porous ceramic with said mixture; (III) heating the impregnated porous ceramic to a temperature sufficient to crosslink silazane polymer; and (IV) pyrolyzing the porous ceramic containing cured silazane polymer to a temperature sufficient to ceramify the polymer.